# EUROPEAN PATENT APPLICATION

(11) **EP 1 918 814 A2**
(43) Date of publication of application: **07.05.2008**
(21) Application number: 07119592.9
(22) Date of filing: 30.10.2007
(51) Int. Cl.: G06F 9/45

(54) **Type validation for applications incorporating a weakly-typed language**

(30) Priority: 30.10.2006 CA 2566025
(71) Applicant: Research In Motion Limited, Waterloo, Ontario N2L 3W8 (CA)
(72) Inventor: Mateescu, Daniel, Woodbridge, Ontario L4L 1E6 (CA); Wetherly, Curtis, Oakville Ontario L6H 5G4 (CA)
(74) Representative: Patel, Binesh

(57) **Abstract**

A method for performing type validation of scripts in a complex application is provided. The method comprises the following steps. A variable table comprising all application domain entities is created. The application domain entities includes formal parameters expected by functions within the application. At least some of the scripts in the application are tokenized into functions and associated actual parameters. The actual parameters are validated in accordance with the corresponding formal parameters in accordance with a predefined rule set. A notification is presented if the actual parameters are not validated. A computer readable medium comprising instructions for executing the method is also provided. A script validator for performing type validation is also provided,

## Description

The present invention relates generally to type validation for computer applications, and specifically for computer applications that include a portion of code defined in a weakly-typed language.

### BACKGROUND

Scripting languages such as Javascript and ECMAScript, for example, are used today at a large scale for building complex computer applications. Many scripting languages have common properties. That is, they favour rapid development over efficiency of execution, since they are normally implemented using interpreters rather than compilers. Also, they are strong at communicating with program components written in other languages. Accordingly, such languages are lightweight, portable and easy to interpret.

However, scripting languages are weakly-typed, which means that they impose few constraints upon scripts, which enables a developer to program code which uses data in an invalid way. Weakly-typed languages require less effort by the developer than strongly-typed languages, because a compiler or interpreter will implicitly perform certain value conversions. As a result of this, weakly-typed programming systems catch fewer errors at compile time, which can make debugging harder. Accordingly, scripting languages lack advanced type validations required by many of the complex applications in which they are now used.

The major drawbacks of using weakly-typed languages are threefold. First, no type verifications can occur in the routines written in such a language.

Second, no design time verifications of routines' arguments are possible. If the routines written in these languages perform manipulations of various data types, type mismatching problems can only be detected at runtime by a language interpreter. In some environments, such as mobile application development, this leads to errors detected late in the development cycle.

Third, weakly-typed languages are not designed to perform complex type validations. They are typically used for form validation in Web applications or for calculations.

Accordingly, there is a need for type validation for scripting languages that obviates or mitigates at least some of the above mentioned disadvantages.

### SUMMARY

In accordance with one embodiment there is provided a script validator for use with an application design tool, the script validator for performing type validation of scripts in a complex application, the script validator comprising: a variable table configured to cache all application domain entities, the application domain entities including formal parameters expected by functions within the application; a function definition module configured to store a function list of application functions and their corresponding parameters; a script parser configured to tokenize at least some of the scripts in the application into a function definition and its associated actual parameters; and a parameter validator configured to validate the tokenized scripts by comparing the actual parameters with the corresponding formal parameter in accordance with a predefined rule set.

In accordance with a further embodiment there is provided a method for performing type validation of scripts in a complex application, the method comprising the steps of: creating a variable table comprising all application domain entities, the application domain entities including formal parameters expected by functions within the application; tokenizing at least some of the scripts in the application into functions and associated actual parameters; validating the actual parameters in accordance with the corresponding formal parameters in accordance with a predefined rule set; and presenting a notification if the actual parameters are not validated.

In accordance with a further embodiment there is provided a computer readable medium comprising instructions for implementing the method described above.

### BRIEF DESCRIPTION OF THE DRAWINGS

Embodiments of the present invention will now be described by way of example only with reference to the following drawings in which:
**Figure 1** is a block diagram of a design tool;
**Figure 2** is a block diagram of a script validator; and
**Figure 3** is flow chart illustrating operation of the script validator.

### DETAILED DESCRIPTION OF THE PREFERRED EMBODIMENTS

For convenience, like numerals in the description refer to like structures in the drawings.

The following description addresses at least some of the problems of the prior art related to the lack of type-validation capability for weakly-typed languages. Although the description refers specifically to component applications developed for mobile devices, a person of ordinary skill in the art will appreciate that it can be used for a number of other complex applications built using scripting languages.

Applications are typically created by an application developer using a design tool provided by an application development environment. In the present embodiment, the design tool provides support for a drag-and-drop graphical approach for visual design of an application. The application development environment executes on a computer as is known in the art. The computer generally includes input and output components for interfacing with a user, memory for storing applications and data, a processor for executing instructions, and a communications module for facilitating communication with a network. The architecture and functionality of a computer for the purpose of the present invention is well known in the art and need not be described further in detail.

Further, for exemplary purposes only, the design tool is used to enable a developer to design a component application. A component application is an application defined generally by a structured set of components, including data components, message components, presentation components and workflow components. The components are defined using a structured language and executed on a client device by an intelligent runtime container.

The data components define data entities that are used by the component application program. Examples of data entities include orders, users, and financial transactions. Data components define what information is required to describe the data entities, and in what format the information is expressed. For example, the data component may define an order comprising a unique identifier for the order, which is formatted as a number; a list of items, which are formatted as strings; the time the order was created, which has a date-time format; the status of the order, which is formatted as a string; and a user who placed the order, which is formatted according to the definition of another one of the data components. Since data elements are usually transferred by message, there is often persistence of data components in a database. Data components may be dynamically generated or defined by the application designer.

The message components define the format of messages used by the component application program to communicate with external systems such as the Web service. For example, one of the message components may describe a message for placing an order, which includes a unique identifier for the order, a status of the order, and notes associated with the order.

The presentation components define the appearance and behaviour of the component application program as it displayed to a user via a user interface. The presentation components can specify graphical user interface (GUI) screens and controls and actions to be executed when the user interacts with the component application. For example, the presentation components may define screens, labels, edit boxes, buttons and menus, and actions to be taken when the user types in an edit box or pushes a button.

The workflow components of the component application program define processing that occurs when an action is to be performed, such as an action specified by a presentation component as described above, or an action to be performed when messages arrive. Presentation workflow and message processing are defined by the workflow components. The workflow components are written as a series of instructions in either structured data or a programming language or a scripting language. The workflow component supports a correlation between message components and defines application flow as a set of rules for operations on other components.

More details regarding component applications can be found in Patent Cooperation Treaty Application Numbers PCT/CA2003/001976 entitled, "System and Method for Building and Execution of Platform-Neutral Generic Services Client Applications" and published as WO2004059938; PCT/CA2003/001980 entitled, "System and Method of Building Wireless Component Applications" and published as WO2004059957; and PCT/CA2003/001981 entitled, "System and Method of Creating and Communicating with Component Based Wireless Applications" and published as WO2004059939, each of which is assigned to the owner of the present application.

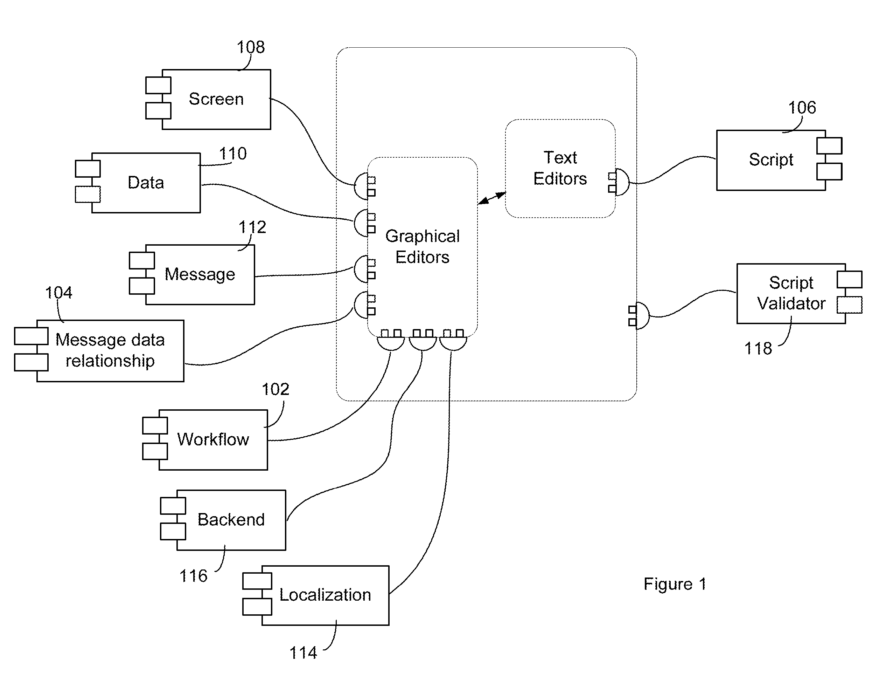

Referring to Figure 1, a block diagram illustrating a collection of user modules available to the design tool is illustrated generally by numeral 100. The user modules includes a workflow editor 102, a relationship editor 104, a script editor 106, a screen editor 108, a data editor 110, a message editor 112, a localization editor 114, a backend editor 116 and a script validator 118.

The workflow editor 102 facilitates creating and modifying command code in the workflow components of the application. The workflow editor 302 defines screen-to-screen transitions that form a visual core of the component application. Screens and transitions between screens due to user/script events are rendered visually.

The relationship editor 104 facilitates creating and modifying structured definition language code in inter-related message and data components of the application. The message/data relationship editor creates and edits relationships between message components and data components. These mappings effect how a data component is populated on message arrival at the mobile device when running the application.

The script editor 106 is a constrained text editor for providing relationships between application components. Typically, this information is provided as part of the workflow component. Some commands, such as creating functions, can be restricted such that they are not user-definable in the component application. Accordingly, when a function is created, the events generated by the script editor are fixed.

The screen editor 108 facilitates creation and modification of structured definition language code in the screen components associated with display of data on the mobile device. User-interface (UI) controls to be included in the screen components can be dropped onto a form canvas in the screen editor 108. Further, control properties, including event handlers, can be edited by the screen editor 108.

The data editor 110 facilitates creation and modification of structured definition language code for the data components of the application by providing the developer an ability to edit data component fields and properties. New data objects can be created from scratch, by prototyping existing data objects, or based on data definition mappings to message objects in message components.

The message editor 112 facilitates creation and modification of structured definition language code for the message components of the application. The message editor 112 allows a developer to create and edit message components for sending messages to and receiving messages from backend servers. These messages can include both request/response pairs as well as subscribe/notify/unsubscribe notification messages.

The localization editor 114 allows the developer to collect all strings that will be visible to a user of the mobile device 100 and edit them in one place. The localization editor 114 allows the developer to create multiple resource mappings for each string into different languages.

The backend editor 116 shows the developer relationships between message components and backend servers that drive the components. The backend editor 316 also allows the developer to add new backend servers to the list of those supported by the application during development.

More details regarding these application can be found in U.S. Application No. 11/405,495 titled "Development Tool and Method for Automating Detection and Construction of Notification-Based Component Applications", Filed April 18, 2006 and assigned to the owner of the present application.

It will be appreciated by a person of ordinary skill in the art that the design tool described above is an example of a design tool for component applications. Since the component application often includes complex scripting using a weakly-typed scripting language (for describing the application workflow) it provides a good sample design tool for describing the present invention. However, other design tools may also be used to develop applications that include complex scripting. In fact, the portability of scripting languages such as Javascript and ECMAScript is a large part of their popularity.

Therefore, in accordance with one embodiment of the invention, the script validation module 118 provides an efficient and convenient mechanism of validating complex-type parameters of functions called from within script applications. This validation occurs at design time, reducing the likelihood that the application will crash at runtime due to complex type mismatches. Type incompatibilities are detected at design time as errors, and the developer has an opportunity to correct these errors prior to provisioning the application.

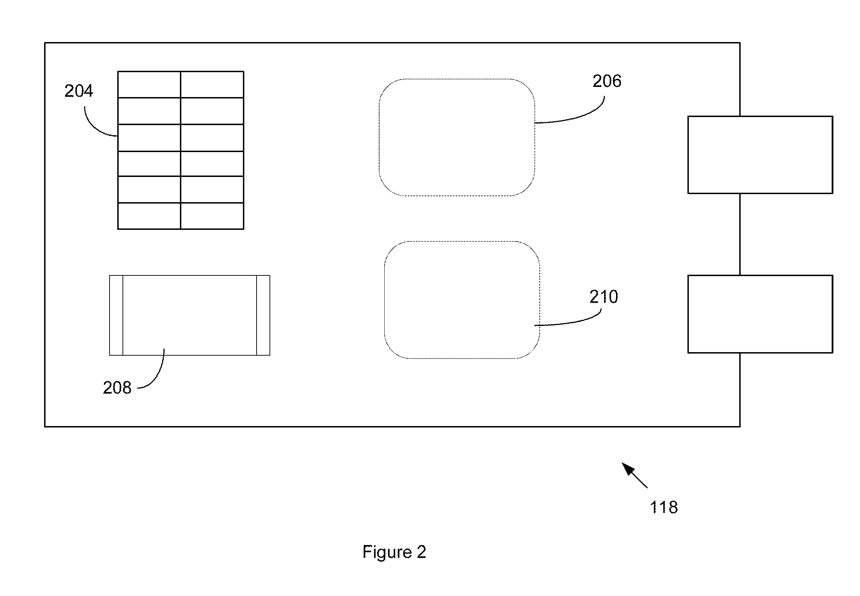

Referring to Figure 2, a block diagram illustrating functional modules of the script validator 118 is shown. The script validator 118 provides an interface to the design tool and is responsible for validating the scripts within the application. It is triggered when the developer decides to save the application. The script validator 118 comprises a variable table 204, a function definition module 206, a script parser 208, and a parameter validator 210.

The variable table 204 caches all application domain entities. A domain encompasses the entire application. In the sample developer tool described above, the domain represents all data components, screen components, application globals, message components, enumerations, scripts, and script parameters. Further, in a component application, application globals can be used for maintaining the state of an application and for simplifying the application workflow. The variable table stores the information in pairs, each pair including a variable name and its corresponding type. The type represents a meta-model describing every entity in the domain.

The function definition module 206 creates a list of function definitions used in the application and their corresponding arguments.

The script parser 208 parses the application and tokenizes the scripts used in the application. The parsing occurs at design time.

The parameter validator 210 validates the parameters in the script. That is, for every token that the script parser 208 identifies as representing a function definition, the parameter validator 210 compares a list of actual parameters, representing the parameter values in the script, with a list of formal parameters, representing the parameters expected by the function. If there are mismatches in terms of number of parameters or types of parameters for any function call within the scripts, a notification is created and a displayed to the developer. In the present example, the notification is communicated to the script editor 106, which can present the information to the developer via a graphical user interface. The parameter validator validates the parameters in the script in accordance with a rule set of validation rules described as follows.

### Screen Parameter and Script Parameter Validation

When the script contains a call for opening a screen, the types of actual parameters passed to the screen are compared with the types of the formal parameters expected by the screen. For example, consider a call for opening a screen "scrFlower.display(Tree)", where scrFlower is the name of the screen element, display is a function associated with the screen element and "Tree" is the name of the actual parameter. In the present example, the display function for screen scrFlower is defined as having a formal parameter of type data component "Flower". The parameter validator 210 compares this type to the type of the actual parameter "Tree" passed to the screen. In this example, the actual parameter "Tree" is determined to be of type data component "Tree". Therefore, the script is invalid because the actual parameter type and the formal parameter type are different. The same validation rules apply for calling another script with parameters.

In addition to data type comparisons, the following validation rules are enforced by the parameter validator 210 for screen and script parameter validation. A null parameter is accepted whenever a parameter data component is expected. Passing more parameters than expected is not permitted. For multiple parameters, the order of the data type of the actual parameters should match in the order of the data types of the formal parameters. If the parameter represents an expression for creating a new entity, referred to as a creational expression, the creational expression is parsed and the resulting entity type is compared against the formal parameter type. When passing dereferenced nested fields, the type of the dereferenced actual parameters must match the type of the dereferenced formal parameters. When passing application globals as parameters, the actual parameter type of the application global is considered to be the type of the underlying data component of that global.

### Validations for Dialog Display Parameters

"Dialog.display()" is a common Javascript construct. parameter validator 210 validates its parameters in accordance with the following validation rules. There should be no more than two parameters. The first parameter is mandatory and must evaluate to a string. The second parameter is optional and can be only "Dialog.OK" or "Dialog.YES_NO".

### Validations for Array-Specific Functions

Arrays include built-in functions for accessing or modifying the array. Accordingly, some of these built-in functions have parameters that need to be validated by the parameter validator 210. Examples of these built-in functions include pushing data onto an array, removing data from an array and retrieving the last value of the array. These are implemented as:
<container>.push(<element>, <element>, <element>, ...>
<container>.remove(<element>, <element>, <element>, ...>
<container>.pop()

In the examples provided above, <container> represents the array and <element> represents the elements or elements to be added or removed to the array. Accordingly, the following validation rules are being checked for the "push" and "remove" methods. An empty parameter list is not acceptable. Null parameters are not accepted. The types of all of the actual parameters must match the formal type of the parameters parameter types. For example, parameters of a specific type of data component can only be added into or removed from arrays of the same type of data component. Similarly, parameters of a primitive type can only be added to or removed from arrays of the same primitive type. For the "pop" method, the validation rule requires that parameter list is empty.

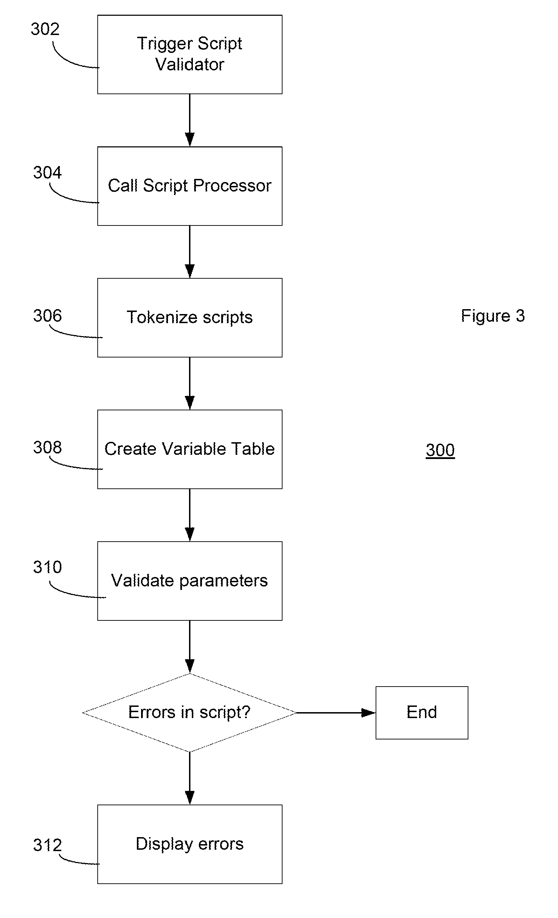

Referring to Figure 3, a flow diagram illustrating operation of the script validator 118 is illustrated generally by numeral 300. At step 302, the script validator 118 is triggered. As described above, in the present embodiment the script validator 118 is triggered when the developer saves the application. Accordingly, once the application is saved, the operation proceeds to step 304. At step 304, the script validator 118 calls the script parser 208.

At step 306 the script parser 208 creates the variable table 204 from all defined entities in the application. In the example of the component application described above, this includes all data components, screen components, application globals, message components, enumerations, scripts, and script parameters.

At step 308, the script parser 208 tokenizes the scripts in the application. The tokenized scripts are analysed to determine which of the scripts relate to functions. For each of these scripts, their function definition and parameter are stored in a function list by the function definition module 206.

At step 310, for each function definition in the function list, the parameter validator 210 compares the actual parameters with the formal parameters in accordance with a predefined rule set. In the present embodiment, this rules set is described above.

At step 312, if any violations of the rules are detected in the script by the parameter validator 210, the developer is presented with a notification to indicate that there are errors in the script. In the present embodiment, the developer is presented with a list of the offending scripts and well as the description of the error. In an alternate embodiment, a project navigator tree is presented to the developer with the offending script visually identified.

Accordingly, it will be appreciated that the validation of scripts as described herein differs from the simple validations performed natively by Javascript, which is used primarily for form validations in Web applications, because it performs validation on the script itself Further, the validation described herein performs complex type validations based on a preliminary parsing of the application domain. The expected formal type of each entity in the domain is compared to the actual type of every parameter programmed by the developer. This provides the developer with a useful tool to troubleshoot the application at design time.

For further explanation of the rule set described above, the following are several example scripts that illustrate different situations. For all examples, scrFlower is a defined screen element having a number of defined entities which are stored in the variable table 204. Once of these entities is a function "display" which expects a parameter of type "Flower".

### Example A

var tree = Tree.create();
var flower = Flower.create();
scrFlower.display(tree); // A
scrFlower.display(flower, tree); // B
scrFlower.display(flower); // C

In this example, function call A will result in an error, since the actual parameter is of type "Tree" and the formal parameter, as described above, is of type "Flower". Therefore, there is a mismatch between the parameter types. Function call B will also result in an error. Even though the function call passes a parameter having a correct type, there are more parameters than expected by the function. Further, the second parameter is the wrong type. Accordingly, function call B violates two of the rules. Function call C will not result in an error as both the correct number and type of parameter are passed.

### Example B

composite = CompositeDataCmp.create();
scrFlower.display(composite.flower);
scriptUpdateInfo(composite.flower);

In this example, in addition to the screen element scrFlower, a script function call to script "scriptUpdate" is made. Similar to the function "display", the script "scriptUpdate" is identified by the variable as expecting a parameter of type "Flower". CompositeDataCmp is a data component having a number of fields including flower of type Flower and tree of type Tree.

This example illustrates passing parameters to either the screen element or the script by dereferencing nested fields of other data instances, nested fields of global variables, or nested fields of script parameters. Several scenarios are possible.

In a first scenario, the developer calls the functions using the correct number of parameters having the expected type. When the developer saves, the project, the script validator 118 approves the scrip and no warnings are displayed.

In a second scenario, the developer calls the functions using less parameters than expected, but of the expected type. When the developer saves, the project, the script validator 118 approves the scrip and no warnings are displayed.

In a third scenario, the developer calls the functions using more parameters than expected or having a different type than expected. When the developer saves, the project, the script validator 118 detects the violation of the rule set. Accordingly, a warning(s) are displayed to the developer. Further, in the project navigator tree, the script containing the wrong parameter(s) is visually identified as having an error.

### Example C

scrFlower.display(Flower.create())
scriptUpdateInfo(Flower.create())

In this example, the parameter passed to the function is expression that evaluates to an instance of a data component, referred to as a creational expression. Several scenarios are possible.

In a first scenario, the creational expression(s) evaluates to a correct number of parameters having the expected type. When the developer saves, the project, the script validator 118 approves the script and no warnings are displayed.

In a second scenario, the creational expression(s) evaluates to less parameters than expected, but of the expected type. When the developer saves, the project, the script validator 118 approves the script and no warnings are displayed.

In a third scenario, the creational expression(s) evaluates to more parameters than expected or having a different type than expected. When the developer saves, the project, the script validator 118 detects the violation of the rule set. Accordingly, a warning(s) are displayed to the developer. Further, in the project navigator tree, the script containing the wrong parameter(s) is visually identified as having an error.

### Example D

gvFlowers.push(Flower.create(), Flower.create());
gvFlowers.push(Flower.create(), Tree.create());

In this example, gvFlowers is a global variable array of type "Flower". Several scenarios are possible.

In a first scenario, the parameter(s) passed to the array are of the expected type. When the developer saves, the project, the script validator 118 approves the scrip and no warnings are displayed.

In a second scenario, the parameter(s) passed to the array are different from the expected. When the developer saves, the project, the script validator 118 detects the violation of the rule set. Accordingly, a warning(s) are displayed to the developer. Further, in the project navigator tree, the script containing the wrong parameter(s) is visually identified as having an error.

Although specific embodiments of the invention have been described herein, it will be understood by those skilled in the art that variations may be made thereto without departing from the spirit of the invention or the scope of the appended claims.

## Claims

1. A script validator (118) for use with an application design tool (100), the script validator (118) for performing type validation of scripts in a complex application, the script validator (118) comprising:
a variable table (204) configured to cache all application domain entities, the application domain entities including formal parameters expected by functions within the application; a function definition module (206) configured to store a function list of application functions and their corresponding parameters
a script parser (208) configured to tokenize at least some of the scripts in the application into a function definition and its associated actual parameters; and
a parameter validator (210) configured to validate the tokenized scripts by comparing the actual parameters with the corresponding formal parameter in accordance with a predefined rule set.

2. The script validator of claim 1, wherein the script parser (208) is further configured to create the variable table (204).

3. The script validator of claim 1 or claim 2, wherein the script parser (208) is further configured to create the function list.

4. The script validator of any one of claims 1 to 3, wherein the corresponding parameters comprise the actual parameters.

5. The script validator of any one of claims 1 to 4, wherein the application domain entities comprise data components, screen components, application global variables, message components, enumerations, scripts, and script parameters of the application.

6. A method for performing type validation of scripts in a complex application, the method comprising the steps of:
creating (306) a variable table (204) comprising all application domain entities, the application domain entities including formal parameters expected by functions within the application;
tokenizing (308) at least some of the scripts in the application into functions and associated actual parameters;
validating (310) the actual parameters in accordance with the corresponding formal parameters in accordance with a predefined rule set; and
presenting (312) a notification if the actual parameters are not validated.

7. The method of claim 6, wherein is the method is triggered is response to request to save the application.

8. The method of claim 6 or claim 7, further comprising the step of creating function table comprising a function list of each of the tokenized functions and associated actual parameters

9. The method of any one of claims 6 to 8, wherein the step of validating the actual parameters comprises:
determining that the actual parameter type and the formal parameter type are of the same type; or
determining that the number of actual parameters is less than or equal to the number of formal parameters.

10. The method of any one of claims 6 to 9, wherein the actual parameter is a dereference nested field or a creational expression.

11. The method of any one of claims 6 to 10, wherein the step of presenting a notification includes presenting an error message.

12. The method of claim 11, wherein the step of presenting an error message includes identifying errors in the application.

13. A computer readable medium comprising instructions for executing on a computer, which, when executed, cause the computer to implement the steps of:
creating (306) a variable table comprising all application domain entities, the application domain entities including formal parameters expected by functions within the application; tokenizing (308) at least some of the scripts in the application into functions and associated actual parameters;
validating (310) the actual parameters in accordance with the corresponding formal parameters in accordance with a predefined rule set; and
presenting (312) a notification if the actual parameters are not validated.
